# EUROPÄISCHE PATENTANMELDUNG

(11) **EP 1 340 423 A2**
(43) Veröffentlichungstag der Anmeldung: **03.09.2003**
(21) Anmeldenummer: 03004283.2
(22) Anmeldetag: 27.02.2003
(51) Int. Cl.: A01K 15/02, A01K 11/00, A01K 29/00

(54) **Verfahren und Vorrichtung zum Prägen eines Tieres, insbesondere einer Kuh**

(30) Priorität: 28.02.2002 DE 10208932
(71) Anmelder: WestfaliaSurge GmbH, 59302 Oelde (DE)
(72) Erfinder: Heyken-Beltermann, 48324 Sendenhorst (DE); Harms, Jelto, 26670 Uplengen-Remels (DE)
(74) Vertreter: Neumann, Ditmar

(57) **Zusammenfassung**

Das erfindungsgemäße Verfahren dient dem Treiben eines Tieres, insbesondere einer Kuh, in einen Zielbereich, insbesondere in einen Melkbereich, wobei das Verfahren auf einer Prägung des Tieres beruht. Das Verfahren umfasst die folgenden Schritte:
a) Die Koordinaten (K1) des Tieres werden zu einem ersten Zeitpunkt t₁ bestimmt.
b) Diesem Tier wird ein Signal gesendet.
c) Zu einem Zeitpunkt (t₂) werden die Koordinaten (K2) des Tieres bestimmt.
d) Daran anschließend wird überprüft, ob sich die Koordinaten des angesprochenen Tier in Richtung eines Zielbereichs verändert haben. Dazu wird überprüft, ob die Koordinatendifferenz (ΔK) der Koordinaten (K2) zum zweiten Zeitpunkt (t₂) und der Koordinaten (K1) zum ersten Zeitpunkt t₁ in einer vorgebbaren Bandbreite von den Koordinaten (K2) in Richtung des Zielbereichs weisen. Ist dies nicht der Fall, wird ein Meldesignal erzeugt.

Das erfindungsgemäße Verfahren ermöglicht beispielsweise tierindividuelle Melkzeiten unter Vermeidung des zeit- und personalintensiven manuellen Nachtreibens.

## Beschreibung

Der Gegenstand der Erfindung bezieht sich auf ein Verfahren zum Beeinflussen eines Tieres. Insbesondere bezieht sich die Erfindung auf ein Verfahren zum Beeinflussen oder Prägen eines Tieres, insbesondere einer Kuh.

Obwohl die vorliegende Erfindung im folgenden mit Bezug auf die Anwendung bei automatischen Melksystemen, wie z.B. roboterunterstützten Melksystemen beschrieben wird, ist die Erfindung auch bei anderen Melksystemen einsetzbar. Beispielsweise kann die Erfindung auch zum Beeinflussen oder insbesondere Prägen des Verhaltens von Tieren in konventionellen Melkständen wie beispielsweise Fischgrätenmelkständen eingesetzt werden. Auch der Einsatz bei Karussellmelkanlagen oder sonstigen manuellen, halbautomatisierten oder automatisierten Melkanlagen ist möglich. Der Einsatz ist sowohl im Stall als auch auf der Weide möglich.

Weiterhin kann die Erfindung nicht nur zum Beeinflussen des Verhaltens oder Prägens nicht nur von Kühen eingesetzt werden, sondern es kann mit der Erfindung grundsätzlich jedes milchabgebende Tier beeinflusst werden. Dazu zählen insbesondere Kühe, Stuten, Schafe, Ziegen, Esel, Kamele, Dromedare, Büffel, Rentiere, Elche, Yaks, Mäuse und dergleichen mehr.

Tiere, wie z. B. Kühe und Schafe, müssen bekanntermaßen in regelmäßigen Abständen gemolken werden. Zur Durchführung dieser Melkvorgänge besonders auch in größeren Herden von Tieren existieren Melkmaschinen, sowie Verfahren zum Melken. Es ist weiterhin bekannt, dass es möglich ist, die Tiere unter Einsatz von Treibeeinrichtungen zu vorgegebenen Zeiten zu Melken. Der Einsatz von Treibeeinrichtungen kann Stress für die Tiere bedeuten, der sich negativ auf Qualität und Quantität der abgegebenen Milch auswirken kann. Zur Umgehung dieser Nachteile kann man die Tiere frei halten und die Tiere selber bestimmen lassen, wann sie gemolken werden möchten. Oder die Tiere werden mit automatischen Melksystemen gemolken, bei denen das Melken häufig auf freiwilliger Basis beruht.

Dies hat den Nachteil, dass eine gewisse Regelmäßigkeit des Melkvorgangs, die trotz allem gewährleistet sein muss, um ein zu schnelles Abklingen der Laktationsperiode zu verhindern, mit einem unter Umständen zeit- bzw. personalintensiven Nachtreiben derjenigen Tiere, die über einen gewissen Zeitraum hinweg nicht mehr gemolken worden sind, verbunden ist. Ursachen für eine nachlassende Motivation können gesundheitliche Probleme oder Rangauseinandersetzungen sein oder sie in der Laktationsperiode oder dem Futterangebot begründet sein.

Die EP 0 332 231 B1 schlägt hierzu vor, die Tiere durch tierspezifische akustische Signale in den Zielbereich, z.B. einen Melkbereich zu rufen. Die tierspezifischen Signale können über Lautsprecher übertragen werden. Durch die EP 0 332 231 B1 wird jedoch nicht sichergestellt, dass ein gerufenes Tier nach Ertönen des tierspezifischen Signals im Melkbereich erscheint.

Davon ausgehend ist es Aufgabe der Erfindung, ein verbessertes Verfahren zur Beeinflussung eines Tieres anzugeben.

Diese Aufgabe wird durch ein Verfahren gemäß den Merkmalen des Anspruchs 1 gelöst. Weitere vorteilhafte Ausgestaltungen des Verfahrens sind Gegenstand der abhängigen Ansprüche.

Erfindungsgemäß wird durch das vorgeschlagene Verfahren eine höhere Sicherheit erreicht, dass das Tier auf ein Signal in gewünschter Weise reagiert und insbesondere in einen Zielbereich gelockt wird.

Konkret wird hierzu vorgeschlagen, dass zu einem ersten Zeitpunkt t₁ die zugehörigen ersten Koordinaten K1 eines Tieres bestimmt werden. Weiterhin wird dem Tier ein Signal TS ausgesandt. Zu einem späteren Zeitpunkt t₂, der nach dem Aussenden des Signals TS liegt, werden die zweiten Koordinaten K2 des Tieres bestimmt. Nach der erfolgten Bestimmung der Koordinaten K2 erfolgt ein Vergleich der zweiten Koordinaten K2 mit den den ersten Koordinaten K1. Ergibt der Vergleich, dass die Koordinatendifferenz ΔK unter einem vorgegebenen Maß liegt, so wird ein Meldesignal ausgelöst.

Das vorgegebene Maß kann absolut, relativ oder tierindividuell festgelegt sein. Beispielsweise kann ein Meldesignal ausgelöst werden, wenn sich die momentane zweite Entfernung des Tieres von dem gewünschten Zielort sich von der ursprünglichen ersten Entfernung nur um einen bestimmten Prozentsatz verringert hat.

Das Meldesignal kann auch ausgegeben werden, wenn die absolute zweite Entfernung größer als ein vorgegebenes Maß ist. Auch eine Kombination ist möglich, so dass bei Tieren, die schon recht nahe am Zielort sind und sich langsam auf den Zielort zubewegen kein Meldesignal ausgelöst wird. Ähnlich kann bei Tieren, die sich in einer großen Ursprungsentfernung befanden, kein Meldesignal ausgegeben werden, wenn sich die relative Entfernung nicht sehr stark verändert hat, sofern sich die absolute Entfernung genügend reduziert hat.

Ein Signal im Sinne dieser Anmeldung ist ein Signal, das durch das Tier wahrgenommen werden kann. Vorzugsweise wird das Signal tierindividuell generiert, so dass die Möglichkeit eröffnet wird, aus einer Vielzahl von Tieren ein spezielles Tier individuell zu erreichen. Das kann über individuelle oder auch tierindividuelle Signale erfolgen. Es ist aber auch möglich, für mehrere Tiere oder eine Gruppe von Tieren oder im wesentlichen alle Tiere das gleiche Signal zu verwenden. Dann ist es bevorzugt, dass z.B. eine Sende-/Empfangseinrichtung verwendet wird, mit der es möglich ist, dass im wesentlichen nur ein bestimmtes Tier das Signal wahrnimmt. Bei Erzeugung des Signals am Tier selbst wird in der Regel das Signal am stärksten von dem Tier selbst wahrgenommen, so dass im wesentlichen nur ein bestimmtes Tier erreichbar ist. Das kann beispielsweise über eine Empfangsadresse realisiert werden, die dem Befehl zur Erzeugung des Signals beigefügt ist.

Wird nach der zweiten Positionsbestimmung des Tieres ein Meldesignal ausgegeben, so wird in einer Weiterbildung der Erfindung erneut ein Signal zu dem Tier gesendet, um das Tier wiederum aufzufordern, den Zielort wieder aufzusuchen. Das Signal kann das gleiche Signal wie beim ersten Aussenden sein. Es ist auch möglich, dass das Signal veränderbar ist, so dass beim ersten Aussenden ein erster Signaltyp und beim zweiten Aussenden ein zweiter Signaltyp verwendet wird, der über die Anzahl der Aussendungen variabel ist. Der Typ kann veränderlich sein. Auch die Intensität des Signals kann zunehmen. Es kann sich aber auch die Art des Signals ändern.

Grundsätzlich ist jeder Signaltyp möglich, den das Tier wahrnehmen kann. Beispielsweise kann ein akustisches und/oder optisches und/oder mechanisches und/oder elektrisches Signal verwendet werden. Es kann z.B. ein Lichtsignal oder ein Tonsignal verwendet werden. Die Signalquellen sind vorzugsweise am Tier selbst angeordnet. So kann z.B. am Halsband einer Kuh eine Licht- und/oder Tonquelle angeordnet sein, die Signale ausgeben kann.

Dann ist es bevorzugt, dass die Signalquelle drahtlos geschaltet wird und von z.B. einem Zentralcomputer den Befehl zur Auslösung eines Tiersignals erhält. Auch mechanische (streicheln, klopfen, etc.) oder elektrische Signale (Reizstromsignale etc.) sind möglich. Möglich ist auch, dass die Signalquellen ortsfest auf dem Gelände vorgesehen sind. Durch geeignete Maßnahmen (Interferenzverstärkung einzelner Signale z.B.) sollte dann sichergestellt werden, dass im wesentlichen nur das ausgewählte Tier das Signal aufnimmt.

In einer bevorzugten Weiterbildung der Erfindung wird nach einer bestimmten Zeitspanne Δt das Signal wiederholt, wenn das Tier sich nur in unzureichendem Maße dem Zielort genähert hat. Es ist auch möglich, dass dem Tier ein Signal gesendet wird, wenn es sich vom Zielort entfernt.

Vorzugsweise ist eine Zähleinrichtung vorgesehen, die das Aussenden des Signals zählt und speichert. Nach Überschreitung einer vorbestimmten Zahl kann das Verfahren abgebrochen werden oder auch die Intensität des Signals erhöht werden. Auch eine Verkürzung des zeitlichen Abstandes kann dann sinnvoll sein.

In einer Weiterbildung der Erfindung wird mindestens eine aversive Handlung an dem Tier durchgeführt, wenn das Tier nach einer vorbestimmten Anzahl von Signalen nicht am Zielort angekommen ist oder sich dem Zielort nur unzureichend genähert hat. Eine aversive Handlung kann auch vorgenommen werden, wenn eine bestimmte Zeit verstrichen ist, seit das Tier gerufen wurde. Es ist auch möglich, dass nach einer bestimmten Zeitspanne Δtg das Verfahren abgebrochen wird.

Eine aversive Handlung wird durch das Tier als unangenehm empfunden. Hierbei ist es möglich, dass die aversive Handlung einen akustischen, optischen, elektrischen oder mechanischen Reiz aufweist. Auch ein Geruchsreiz ist möglich. Ebenso kann die aversive Handlung auch die Aussendung oder Anwendung eines Reizes beinhalten, der eine Mischung von mindestens zwei von diesen Reizen aufweist.

Die Zeitspanne zwischen der Durchführung der aversiven Handlung und dem Aussenden eines tierindividuellen Signals TS ist dabei vorzugsweise so bemessen, dass für das Tier ein Zusammenhang zwischen dem Signal und der aversiven Handlung entsteht und das Tier zur Vermeidung einer aversiven Handlung in der gewünschten Art und Weise reagiert. Durch diese Verfahrensführung wird eine höhere Sicherheit erreicht, dass das Tier im Wege einer Beeinflussung bzw. Prägung auf das Erzeugen bzw. Aussenden des Signals in gewünschter Weise reagiert und vorzugsweise in einem Zielbereich erscheint. Der Zielbereich ist vorzugsweise ein Melkbereich. Ebenso kann der Zielbereich auch ein Fütterungsbereich, ein Behandlungsbereich oder dergleichen sein.

Zwischen dem Aussenden des Signals, das auch tierindividuell sein kann, und dem Zeitpunkt t₂ sollte eine relativ geringe Zeitspanne verstreichen. Vorzugsweise sollte diese Zeitspanne derart bemessen sein, dass sich die Position des Tieres seit Bestimmung der Position zum Zeitpunkt t₂ nicht wesentlich verändert hat.

Im Zielbereich kann zusätzlich eine Futterausgabe erfolgen, um das Tier zum Aufsuchen des Zielbereiches zu veranlassen. Hierdurch wird die Befolgung des Signals mit einem positiven Reiz für das Tier verknüpft.

Das erfindungsgemäße Verfahren bietet die Möglichkeit, einzelne Tiere zum Melken zu locken bzw. rufen, wobei der Nachteil des aufwendigen z.B. manuellen Nachtreibens wenigstens teilweise vermieden werden kann. Es können tierindividuelle Melkzeiten berücksichtigt werden. Die Anwendung von Zwang ist erfindungsgemäß bei den meisten Tieren nicht nötig.

Ein Vorteil der Erfindung ist, dass eine Abstimmung auf die gesamte Herde erfolgen kann. So kann die Besuchsfrequenz der Melkanlage oder der Fütterungsstation vereinheitlicht werden. So ist eine Durchsatzerhöhung möglich, indem die Kapazität besser ausgenutzt wird. Auch die Möglichkeit von planbaren Systempausen ist gegeben, indem die noch ausstehenden Tiere zum Melken oder Füttern gerufen werden.

Gemäß einer vorteilhaften Ausgestaltung des Verfahrens werden die Schritte der Koordinatenbestimmung zu einem ersten Zeitpunkt, des Aussendens eines Signals zu dem Tier, der Koordinatenbestimmung zu einem zweiten Zeitpunkt und des Koordinatenvergleichs und der eventuellen Erzeugung des Meldesignals wiederholt, bis durch das Tier eine Meldung M ausgelöst und/oder eine vorgegebene Zeitspanne Δt verstrichen ist und/oder eine vorbestimmte Anzahl an Meldesignalen überschritten wurde. Insbesondere kann eine solche Meldung M als Erfolgsmeldung ausgelöst werden, wenn das Tier den Zielbereich betritt oder sich in diesem befindet.

Gemäß einer bevorzugten Ausgestaltung des Verfahrens werden wenigstens die Schritte der Koordinatenbestimmung zu einem zweiten Zeitpunkt und des Koordinatenvergleichs und der eventuellen Erzeugung des Meldesignals wiederholt. Dazu können nach Erzeugung eines Meldesignals die Koordinaten der zweiten Positionsbestimmung den Koordinaten der ersten Positionsbestimmung zugeordnet werden, so dass mit einer darauf folgenden neuen "zweiten" Positionsbestimmung die Ortsdifferenz zu der vorherigen Positionsbestimmung erfolgen kann.

Bevorzugt ist nach Erzeugung eines Meldesignals die Aussendung eines Signals, um das Tier erneut aufzufordern, den Zielbereich aufzusuchen.

Folglich werden zumindest die Schritte Aussendung eines Signals zu dem Tier und Koordinatenbestimmung des Tieres eventuell mehrfach durchlaufen. Da es jedoch möglich ist, dass das Tier aus bestimmten Gründen nicht in den Zielbereich kommen kann, wenn also zum Beispiel eine Verletzung vorliegt oder das Tier nicht im Stall bzw. Zugriffsbereich ist, oder das Tier temporär z.B. das Signal und/oder die aversive Handlung nicht wahrnehmen kann, beispielsweise durch das Vorliegen stärkerer Umgebungsreize, so ist es erfindungsgemäß sinnvoll, eine maximale Anzahl von Durchläufen von Verfahrensschritten vorzusehen. Die Maximalzahl kann auch tierindividuell festlegbar oder bestimmbar sein. So kann der z.B. Gesundheitsstatus, das Alter oder das typische Verhaltensmuster des Tieres berücksichtigt werden. Sollte diese maximale Anzahl von Durchläufen erreicht sein, ist es vorteilhaft, eine Fehlermeldung auszugeben bevor oder während das Verfahren beendet wird.

Gemäß einer noch weiteren vorteilhaften Ausbildung des Verfahrens wird die Bestimmung der Koordinaten K1 zu einem ersten Zeitpunkt t₁ und der Koordinaten K2 zu einem zweiten Zeitpunkt t₂, sowie gegebenenfalls die erneute Aussendung des Signals und/oder die Ausführung zumindest einer aversiven Handlung so oft durchgeführt, bis durch das Tier beim Erreichen des Zielbereichs eine Meldung bzw. in diesem Falle Erfolgsmeldung ausgelöst wird.

Dies gestattet vorteilhafterweise, die mindestens eine aversive Handlung nur dann auszuführen, wenn das Tier auf dem Weg von den ersten Koordinaten K1 zu dem Zielbereich von einem günstigen Weg abweicht. Es ist hier auch möglich, nicht immer beide Koordinaten K1, K2 neu zu bestimmen, sondern die Koordinaten K2 des Tieres zum zweiten Zeitpunkt t₂ für eine folgende weitere Ausführung des Verfahrens als erste Koordinaten K1 zu einem ersten Zeitpunkt t₁ zu verwenden.

Gemäß einer noch weiteren vorteilhaften Ausgestaltung des Verfahrens wird, falls die Koordinatendifferenz ΔK außerhalb der vorgegebenen Bandbreite liegt, die aversive Handlung so lange wiederholt, bis das Tier im Zielbereich eine Meldung ausgelöst hat, ohne jedoch das entsprechende (auch tierindividuelle) Signal zu wiederholen. Es ist zum Beispiel möglich, eine solche Meldung beim Betreten oder auch beim Erreichen des Zielbereichs auszulösen. Dies gestattet es vorteilhafterweise, eine vorhandene Prägung des Tieres zu verstärken, da ein Nichtbefolgen des tierindividuellen Signals zu einer Bestrafung des Tieres führt.

Gemäß einer vorteilhaften Ausbildung des Verfahrens wird mindestens ein akustisches Signal ausgesendet. Dieses Signal kann sowohl das tierindividuelle Signal, ein Teil des tierindividuellen Signals oder auch Teil der aversiven Handlung sein. Vorteilhafterweise wird ein Frequenzbereich gewählt, in dem die Wahrnehmungsfähigkeit des Tieres besonders hoch ist. Im Falle der Aussendung eines akustischen Signals zumindest als Teil der aversiven Handlung wird ein Frequenzbereich gewählt, der für das Tier besonders unangenehm ist.

In einer weiteren vorteilhaften Ausgestaltung des Verfahrens wird als akustisches Signal mindestens ein Ton ausgesendet. Es kann sich hierbei um einen Ton, einen Mehrklang, wie z.B. ein Zweiklang, oder eine Tonfolge handeln. Bei einer Tonfolge sind beliebige Kombinationen von Tönen in unterschiedlichen Frequenzbereichen und Lautstärken möglich.

Nach einer noch weiteren Fortbildung des Verfahrens wird als akustisches Signal eine phonetische aussprechbare Tonfolge verwendet. Besonders vorteilhaft ist hier die Verwendung eines Namens der Kuh oder eines Lautes, den die Tiere selbst oder männliche Tiere oder Jungtiere in ähnlicher Art erzeugen. Ein weiterer Vorteil ist, dass das Signal nicht nur maschinell erzeugt, sondern vielmehr auch durch Menschen in anderen Zusammenhängen verwendet kann.

Gemäß einer weiteren vorteilhaften Ausgestaltung ist es alternativ oder zusätzlich möglich, neben dem akustischen auch ein optisches Signal auszusenden. Auch hier ist es vorteilhaft, einen Wellenlängenbereich zu wählen, in dem die Wahrnehmung des Tieres besonders sensibel ist. Das Signal kann hier wiederum sowohl mindestens teilweise das tierindividuelle Signal, als auch Teil der aversiven Handlung sein.

Gemäß einer weiteren vorteilhaften Fortbildung des Verfahrens nimmt die Stärke und/oder die Frequenz einer auf eine erste aversive Handlung folgenden aversiven Handlung zu. Das gleiche gilt auch für das Signal. Beides erhöht in vorteilhafter Weise die Wirkung des Signals oder der aversiven Handlung auf das Tier.

Gemäß einer noch weiteren vorteilhaften Ausgestaltung des Verfahrens ist die vorgegebene Zeitspanne Δt mindestens so bemessen, dass das Tier auch dann den Zielbereich, insbesondere den Melkbereich, innerhalb der vorgegebenen Zeitspanne Δt erreichen kann, wenn es sich zum Zeitpunkt des Aussendens des tierindividuellen Signals weit oder sogar weitestmöglich vom Zielbereich bzw. vom Melkbereich entfernt aufhält.

Gemäß einer noch weiteren vorteilhaften Ausführung des Verfahrens ist vorgesehen, die momentanen Koordinaten des Tieres zu bestimmen. Dies ist besonders vorteilhaft, da es dadurch möglich ist, die Koordinaten der aktuellen Position des Tieres beständig und nicht nur zu einzelnen Zeitpunkten zu kontrollieren. Ein solches Verfahren gestattet es, sehr schnell festzustellen, ob beispielsweise das Tier am Erreichen des Zielbereichs gehindert ist. Dabei können auch tieruindividuelle Verhaltensmuster berücksichtigt werden (Historie der letzten Stunden, Tage, Wochen, Monate oder Jahre).

Gemäß einer noch weiteren vorteilhaften Ausgestaltung des Verfahrens werden die Koordinaten des Tieres durch ein Ortungssystem bestimmt, welches beispielsweise mit einem satellitengestützten System oder mit einem System mit Pseudosatelliten oder dergleichen arbeitet. Auch die Verwendung von ortsfesten Sendern mit beweglichen Empfängern oder von ortsfesten Empfängern mit beweglichen Sendern ist möglich. Hierbei ist es denkbar, einen Empfänger oder Sender für ein solches Ortungssystem in einen oftmals schon vorhandenen Transponder des Tieres einzubauen. Möglich ist auch die Positionsbestimmung über sonstige Sensoren, so z.B. über eine Bilderkennung, über Temperatursensoren, Geruchssensoren, Schallsensoren oder dergleichen mehr. Derartige Ortungssysteme gestatten die Bestimmung von ein-, zwei- oder auch dreidimensionalen Koordinaten des Tieres mit der erforderlichen Genauigkeit.

Gemäß einer weiteren vorteilhaften Ausbildung des Verfahrens wird die Zeitspanne Δt in Abhängigkeit von den Koordinaten des Tieres relativ zu den Koordinaten des Zielbereich während des Aussendens des Signals bestimmt. Somit kann vorteilhafterweise auf die jeweilige individuelle Position des Tiers Rücksicht genommen werden, um so die potentiellen Wartezeiten, in denen das Auslösen einer Meldung durch das Tier im Zielbereich, insbesondere im Melkbereich, erfolgt, zu optimieren. Durch die Möglichkeit, die Zeitintervalle Δt jedes Tieres möglichst klein zu halten, wird so die Totzeit einer Melkanlage vorteilhaft vermindert.

Gemäß einer noch weiteren vorteilhaften Ausführung des Verfahrens erfolgt die Auslösung einer Meldung genau dann, wenn festgestellt wird, dass die momentanen Koordinaten des Tieres innerhalb des Zielbereichs liegen. Vorteilhafterweise kann dadurch auf die Benutzung eines speziellen zusätzlichen Tieridentifikationssensors verzichtet werden.

Gemäß einer noch weiteren vorteilhaften Ausgestaltung des Verfahrens wird das Signal zumindest unmittelbar vor einer Fütterung, insbesondere in dem Zielbereich ausgesendet. Dies hat den Vorteil, dass das Tier den positiven Reiz einer Fütterung mit dem Signal verknüpft, so dass eine positive Prägung des Tieres auf das ihm zugeordnete Signal erfolgt.

Gemäß einer noch weiteren vorteilhaften Ausgestaltung des Verfahrens wird das Signal zusätzlich vor dem Betreten des Zielbereichs durch das Tier ausgesendet. Dies verstärkt eine schon vorhandene positive Prägung des Tieres auf das ihm zugeordnete Signal vorteilhaft. In Kombination mit der Aussendung des Signals zum Beispiel beim Füttern im Zielbereich ist so eine positive Prägung des Tieres auf das Signal zuverlässig möglich.

Gemäß einer noch weiteren vorteilhaften Ausgestaltung des Verfahrens wird das Signal dann ausgesendet, wenn seit der letzten Meldung eine Periode (Zeitspanne) T verstrichen ist, die außerhalb eines vorgegebenen Toleranzfeldes liegt. Damit ist gewährleistet, dass spezielle periodisch am oder mit dem Tier durchzuführende Vorgänge wie z.B. das Melken, das Füttern oder auch die Gabe von Medikamenten, kontrolliert, jedoch ohne die direkte Anwendung von Zwang am Tier, durchzuführen sind. Die Periode T ist gegebenenfalls tierindividuell zu bestimmen, was beispielsweise bei Gabe von Medikamenten vorteilhaft ist.

Gemäß einer noch weiteren vorteilhaften Ausgestaltung des Verfahrens wird das Aussenden des Signals mit darauf folgender Überprüfung, ob durch das Tier in dem Zielbereich innerhalb einer vorgegebenen Zeitspanne Δt eine Meldung ausgelöst wurde, mindestens einmal wiederholt.

Gemäß einer noch weiteren vorteilhaften Ausgestaltung des Verfahrens wird das Aussenden eines Signals so oft wiederholt, bis entweder die Meldung erfolgt oder die Zeitspanne Δt abläuft. Dies minimiert weiterhin das Risiko, dass das Tier temporär für nur einen kurzen Zeitraum nicht in der Lage ist, das Signal wahrzunehmen und demzufolge Objekt einer aversiven Handlung zu sein, dessen Durchführung durch das wiederholte Aussenden des Signals vermieden werden kann.

Gemäß einer noch weiteren vorteilhaften Ausgestaltung des Verfahrens wird bei der Bestimmung der Bandbreite, innerhalb derer die Koordinatendifferenz ΔK zwischen den Koordinaten K1 zum ersten Zeitpunkt t₁ und den Koordinaten K2 zum zweiten Zeitpunkt t₂ liegen darf, ohne dass es zur Durchführung einer aversiven Handlung kommt, die Topologie des Geländes, in dem sich das Tier zum ersten Zeitpunkt t₁ und/oder zum zweiten Zeitpunkt t₂ aufhält, berücksichtigt.

Vorteilhafterweise wird bei der Festlegung der Bandbreite die Luftlinie zugrundegelegt, wenn die Topologie des Geländes es zulässt, dass das Tier diese benutzen würde. Ist dies nicht möglich, beispielsweise bei einem hügeligen oder felsigen Gelände, so werden diese topologischen Eigenschaften des Geländes berücksichtigt und der zulässige Bereich für ΔK entsprechend festgelegt.

Gemäß eines weiteren erfinderischen Gedankens wird eine Vorrichtung zum Treiben eines Tieres in einen Zielbereich vorgeschlagen, die mindestens einen Aufenthaltsbereich, einen Zielbereich, mindestens einen Signalgeber und mindestens eine Tierdetektionseinheit umfasst. Durch das Aussenden eines Signals durch den Signalgeber wird das betreffende Tier aus dem Aufenthaltsbereich in den Zielbereich gerufen. Daran anschließend wird durch eine Tierdetektionseinheit überprüft, ob das betreffende Tier innerhalb einer vorgegebenen Zeitspanne Δt eine Meldung auslöst. Diese Meldung wird vorteilhafterweise durch das Betreten des Zielbereichs durch das Tier, bzw. durch den Aufenthalt des Tiers im Zielbereich ausgelöst. Falls während der Zeitspanne Δt keine Meldung ausgelöst wird, wird ein aversives Signal durch einen Signalgeber an das betreffende Tier übertragen.

In diesem Fall erfolgt sukzessive eine erneute Prüfung, ob das Tier eine Meldung auslöst.

Ein Signal kann auch für jedes einzelne Tier unterschiedlich sein, also nicht nur tierindividuell in der Zustellung, sondern auch tierindividuell in der Art. Beispielsweise können für unterschiedliche Tiere akustische Signale mit unterschiedlicher Frequenz generiert werden. Z.B. Signale mit einem gewissen Frequenzabstand von z.B. 100 oder 500 Hz oder dergleichen. Auch unterschiedliche Farben (z.B. rot/blau/grün etc.) bei Lichtsignalen sind möglich. Auch die Generierung gleicher Signale für Tiergruppen ist möglich, wobei dann die Zustellung tierindividuell erfolgt.

Es kann auch über die Erzeugung eines Signals oder mehrerer unterschiedlicher Signale eine (bestimmte) Tiergruppe oder die ganze Herde zum Melken oder Füttern etc. gerufen werden. So kann z.B. eine Tiergruppe in Abhängigkeit von der Laktationsperiode oder von der Größe der Tiere (entsprechende Roboterverstellung bzw. Melkplatzeinrichtung), dem Gesundheitsstatus (geringere Wahrscheinlichkeit der Krankheitsübertragung von kranken zu gesunden Tieren), dem Alter oder der Rasse der Tiere ausgewählt werden.

Weitere Vorteile und Einzelheiten des Verfahrens werden in der Zeichnung erläutert, wobei die Erfindung nicht auf die dort beschriebenen Abläufe und Ausführungsbeispiele beschränkt ist.

Es zeigen schematisch:
- Fig. 1: einen Ablauf eines erfindungsgemäßen Verfahrens zum Treiben eines Tieres,
- Fig. 2: den zeitlichen Ablauf eines ersten Ausführungsbeispiels,
- Fig. 3: den zeitlichen Ablauf eines zweiten Ausführungsbeispiels,

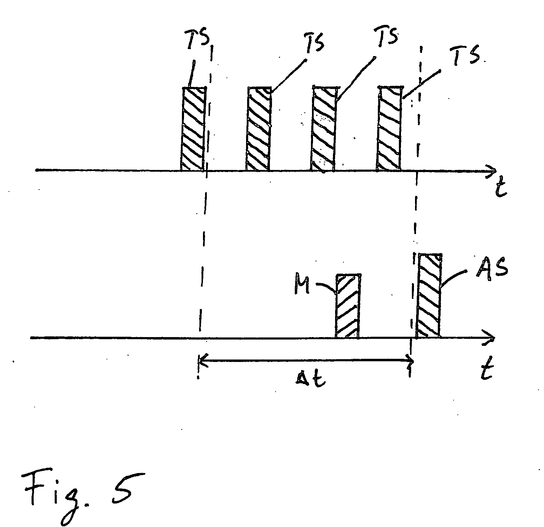

- Fig. 4: ein zweites Beispiel des zeitlichen Ablaufs,
- Fig. 5: ein drittes Ausführungsbeispiel des zeitlichen Ablaufs,
- Fig. 6: den Aufbau einer Anlage zur Durchführung des Verfahrens, und
- Fig. 7: Einzelheiten eines Melkbereichs.

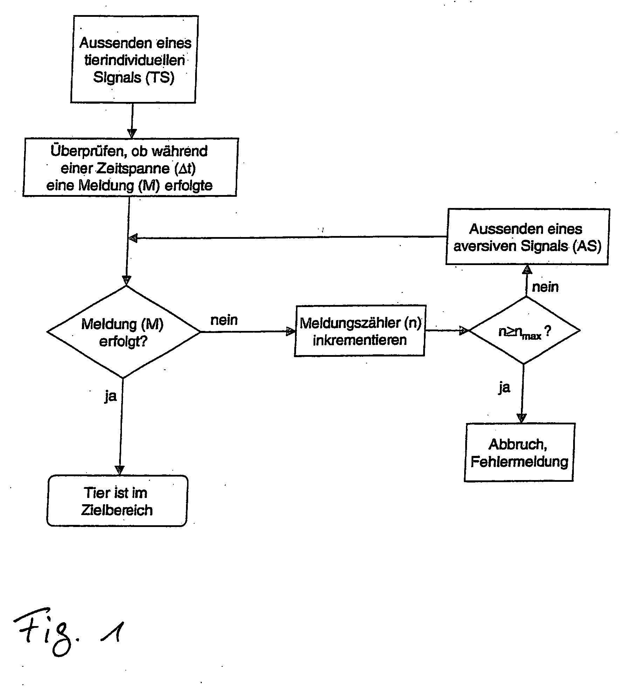

Figur 1 zeigt schematisch den Ablauf eines erfindungsgemäßen Verfahrens. Aufgrund einer erfolgten Prägung eines Tieres, insbesondere einer Kuh, auf ein diesem zugeordnetes Signal TS soll das Tier nach dem Aussenden des Signals TS einen Zielbereich, insbesondere einen Melkbereich, aufsuchen. Um dies zu überprüfen, werden zu einem ersten Zeitpunkt t₁ die ersten Koordinaten K1 des Tieres bestimmt. Daran anschließend wird das Signal TS an das entsprechende Tier ausgesendet. Das Signal TS kann auf akustischem, auf optischem oder allgemein elektromagnetischem Weg ausgesendet werden. Das Signal TS kann beispielsweise akustisch und/oder optisch sein, die Erfindung ist jedoch nicht darauf beschränkt.

Alle möglichen Signale, die das Tier sensorisch erfassen kann, sind erfindungsgemäß möglich. Bei der Aussendung eines zumindest teilweise akustischen Signals TS kann dieses aus einem Ton oder einer Tonfolge, insbesondere einer phonetisch aussprechbaren Tonfolge wie zum Beispiel einem Namen des Tieres bestehen. Auch die Generierung einer charakteristischen Tonfolge ist möglich, z.B. die Erzeugung der Laute, wie (hungrige) Kälber sie von sich geben.

Zu einem späteren zweiten Zeitpunkt t₂ werden die zweiten Koordinaten K2 des Tieres bestimmt. Der zeitliche Abstand des zweiten Zeitpunkts t₂ vom ersten Zeitpunkt t₁ sollte geeignet kurz gewählt werden, da das Tier schnell auf die Aussendung des (z.B. tierindividuellen) Signal reagieren soll. Ergibt eine Prüfung, dass eine Koordinatendifferenz ΔK der Koordinaten K2 zum zweiten Zeitpunkt t₂ und der Koordinaten K1 zum ersten Zeitpunkt t₁ außerhalb einer vorgegebenen Bandbreite liegen, dass heißt, wird festgestellt, dass der Bewegungsvektor des Tieres nicht im Rahmen einer Bandbreite in Richtung des Zielbereichs weist, können die bisherigen Verfahrensschritte wiederholt werden. Es kann nach einer vorgegebenen Anzahl (je nach Bedarf und Tier auch schon beim ersten Mal) an dem Tier mindestens eine tierindividuelle aversive Handlung AH durchgeführt werden.

Bei Vorgabe der Bandbreite ist es erfindungsgemäß möglich, topologische Eigenschaften des Geländes, in dem sich das Tier bewegt, zu berücksichtigen. Beispielsweise ist es möglich, wenn ein Hindernis, z. B. ein Stein oder Fels, in Luftlinie zwischen den Koordinaten Kq zum ersten Zeitpunkt tl und dem Zielbereich liegt, eine größere Bandbreite zuzulassen als wenn das Gelände zwischen den Koordinaten K1 zum ersten Zeitpunkt tl und dem Zielbereich flach und ohne Hindernisse ausgebildet ist.

Die tierindividuelle aversive Handlung AH kann beispielsweise aus der Ausübung mechanischer, elektrischer, akustischer oder optischer Reize oder Geruchsreize, oder auch aus einer Mischung von mindestens zwei dieser Reize bestehen, sie ist jedoch nicht auf die hier geschilderten Beispiele beschränkt.

Vorteilhafterweise wird nun die aversive Handlung AH so lange wiederholt, bis das Tier eine Meldung M auslöst oder ein vorgegebenes Zeitintervall Δt verstrichen ist. Dies kann zum Beispiel dadurch geschehen, dass mechanische Reize so ausgeübt werden, dass das Tier seine Bewegungsrichtung in Richtung des Zielbereichs ändert, um den mechanischen Reizen auszuweichen. Bei akustischen Reizen ist es exemplarisch möglich, die Lautstärke oder Frequenz des akustischen Reizes zu erhöhen, wenn sich das Tier vom Zielbereich wegbewegt und zu verringern, wenn sich das Tier dem Zielbereich nähert.

Beispielsweise kann das Tier beim Betreten oder auch nach dem Betreten des Zielbereichs eine Meldung M auslösen. Es ist zusätzlich auch möglich, das Auslösen einer solchen Meldung nur für ein vorgegebenes Zeitintervall Δt zu überprüfen. Dadurch ist es möglich, für den Fall, dass das Tier nicht in der Lage ist, in den Zielbereich zu gelangen, die Zeit, während der es wiederholt durch Signale aufgefordert wird bzw. während der es wenigstens einer aversiven Handlung AH ausgesetzt ist, zu limitieren. Beispielsweise kann es sein, dass das Tier aufgrund von überlagernden Umgebungsreizen, z. B. Lärm im Falle von akustischen Signalen, das Signal und/oder die aversive Handlung AH nicht wahrnehmen kann.

Sollte jedoch die Koordinatendifferenz ΔK von den Koordinaten K1 zum ersten Zeitpunkt t₁ im Rahmen einer vorgegebenen Bandbreite in Richtung des Zielbereichs weisen, so werden keine aversiven Handlungen AH am entsprechenden Tier vorgenommen, es können sich gegebenenfalls weitere Verfahrensschritte anschließen.

Beispielsweise können regelmäßig die Koordinaten des Tieres im Vergleich zum Zielbereich überprüft werden, um sicherzustellen, dass sich das Tier auch in Richtung des Zielbereichs bewegt, gegebenenfalls ist auch hier die Durchführung mindestens einer aversiven Handlung AH vorgesehen.

Erfindungsgemäß ist es auch möglich, die Frequenz und/oder die Amplitude einer auf die aversive Handlung AH folgenden aversiven Handlung AH zu erhöhen.

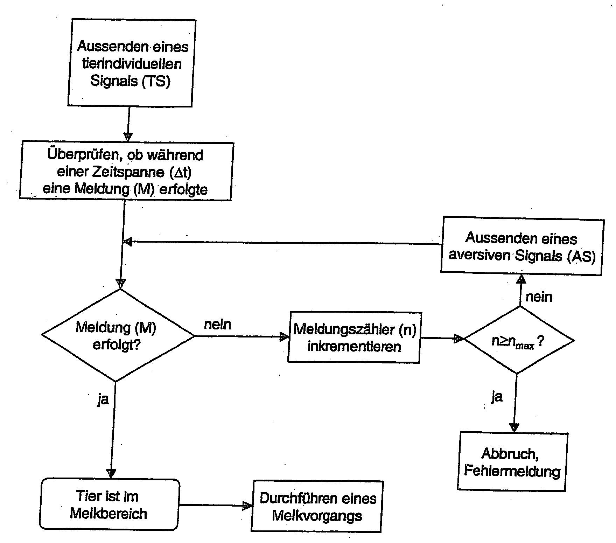

Den zeitlichen Ablauf eines Ausfürungsbeispiels zeigt Figur 2. Nach Auslösen der letzten Meldung M, beispielsweise durch das Betreten des Zielbereichs durch das Tier, ist eine Periode (Zeitspanne) T verstrichen, die außerhalb eines vorgegebenen Toleranzfeldes liegt. Dann wird zu einem ersten Zeitpunkt t₁ eine Bestimmung der Koordinaten K1 des Tieres durchgeführt. Danach wird ein dem Tier zugeordnetes tierindividuelles Signal TS ausgesendet und zu einem späteren zweiten Zeitpunkt t₂ die Koordinaten K2 des Tieres bestimmt. Liegt die Koordinatendifferenz ΔK der Koordinaten K1 zum ersten Zeitpunkt t₁ und der Koordinaten K2 zum zweiten Zeitpunkt t₂ außerhalb einer vorgegebenen Bandbreite, so kann das Signal wiederholt werden oder auch eine aversive Handlung AH am entsprechenden Tier durchgeführt werden. Daran anschließend kann, wie durch den gestrichelten Pfeil angedeutet, wieder mit der Bestimmung der Koordinaten K1 des Tieres zu einem ersten Zeitpunkt t₁ begonnen werden. Alternativ ist es, wie durch den gepunkteten Pfeil angedeutet, möglich, die aversive Handlung so lange am entsprechenden Tier durchzuführen, bis eine Meldung M durch das Tier ausgelöst wurde oder eine vorgegebene Zeitspanne Δt verstrichen ist.

Beide in dieser Figur gezeigten möglichen Verfahren sind beendet, wenn eine Meldung M, beispielsweise durch Betreten des Zielbereichs durch das Tier, ausgelöst wurde oder eine vorgegebene Zeitspanne Δt verstrichen ist. Durch die Vorgabe einer Zeitspanne Δt ist es möglich, das Verfahren zu beenden, wenn das Tier zum Beispiel wegen einer Verletzung oder der Dominanz anderer äußerer Reize gegenüber dem tierindividuellen Signal TS nicht zum Zielbereich kommen kann. Bevorzugt wird die Zeitspanne Δt so vorgegeben, dass das Tier auch vom weitestmöglich entfernten Punkt unter normalen Umständen den Zielbereich erreichen kann.

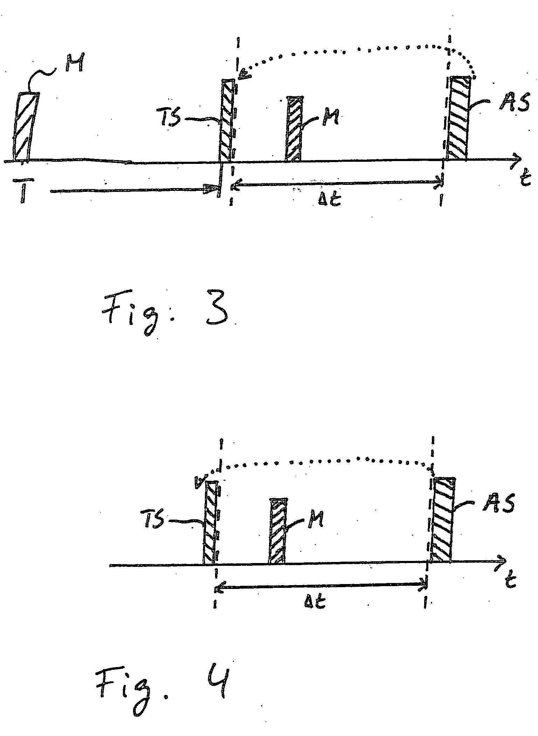

Eine weitere Möglichkeit eines erfindungsgemäßen Verfahrensablaufes ist Figur 3 zu entnehmen. Auch hier erfolgt - zum Beispiel, nachdem seit der letzten Meldung M eine Zeit T verstrichen ist, die länger als ein vorgegebenes Toleranzfeld ist - zu einem ersten Zeitpunkt t₁ eine Bestimmung der Koordinaten K1, der die Aussendung eines z.B. tierindividuellen Signals TS folgt. Zu einem späteren Zeitpunkt t₂ werden die Koordinaten K2 des Tieres bestimmt. Liegt die Koordinatendifferenz ΔK der Koordinaten K1 zum ersten Zeitpunkt t₁ und der Koordinaten K2 zum zweiten Zeitpunkt t₂ außerhalb einer vorgegebenen Bandbreite, so wird eine aversive Handlung AH am entsprechenden Tier durchgeführt. Danach erfolgt zu einem weiteren ersten Zeitpunkt t₁' die Bestimmung der Koordinaten K1 des Tieres. Zu einem späteren weiteren zweiten Zeitpunkt t₂' erfolgt die Bestimmung der Koordinaten K2 des Tieres, ohne das zwischen t₁' und t₂' eine weitere Aussendung des Signals TS durchgeführt wird. Dann erfolgt eine Prüfung der Koordinatendifferenz ΔK wie oben geschildert, daran anschließend gegebenenfalls eine weitere aversive Handlung AH. Das weitere Verfahren ist durch den gestrichelten Pfeil angedeutet, es besteht aus regelmäßigen Bestimmungen der Koordinaten K1, K2 des Tieres und gegebenenfalls aversiven Handlungen AH, jedoch wird das tierindividuelle Signal TS nicht mehr ausgesendet. Durch diese Ausgestaltung des Verfahrens wird eine eventuelle Schwächung der Prägung auf das tierindividuelle Signal TS durch Verbindung des tierindividuellen Signals TS mit einem negativen Reiz, der aversiven Handlung AH, vermieden, wobei eine eventuelle Bewegung des Tieres in Richtung des Zielbereichs berücksichtigt wird.

Das Verfahren ist beendet, wenn durch das Tier eine Meldung M ausgelöst wird, beispielsweise wenn das Tier den Zielbereich betritt, oder wenn eine vorgegebene Zeitspanne Δt verstrichen ist. In letzterem Falle wird eine Fehlermeldung ausgelöst. Durch das Beenden des Verfahrens nach einer vorgegebenen Zeitspanne Δt ist es möglich, zu berücksichtigen, dass das Tier möglicherweise nicht zum Zielbereich kommen kann, beispielsweise wenn eine Verletzung vorliegt.

Figur 5 zeigt schematisch eine Anlage, in der das erfindungsgemäße Verfahren zum Treiben und Melken von Tieren umgesetzt werden kann. Es zeigt einen Aufenthaltsbereich 1, einen Melkbereich 2 und Melkstände 3. Das Tier 4 wird durch Übertragung eines tierspezifischen akustischen Signals TS durch einen Lautsprecher 5 aus dem Aufenthaltsbereich 1 in den Melkbereich 2 gerufen. Die Zeitspanne Δt ist dabei so vorgegeben, dass das Tier 4, selbst wenn es sich weitestmöglich vom Eingang 6 des Melkbereichs 2 im Aufenthaltsbereich 1 aufhält, unter normalen Umständen innerhalb der Zeitspanne Δt den Eingang 6 zu erreichen.

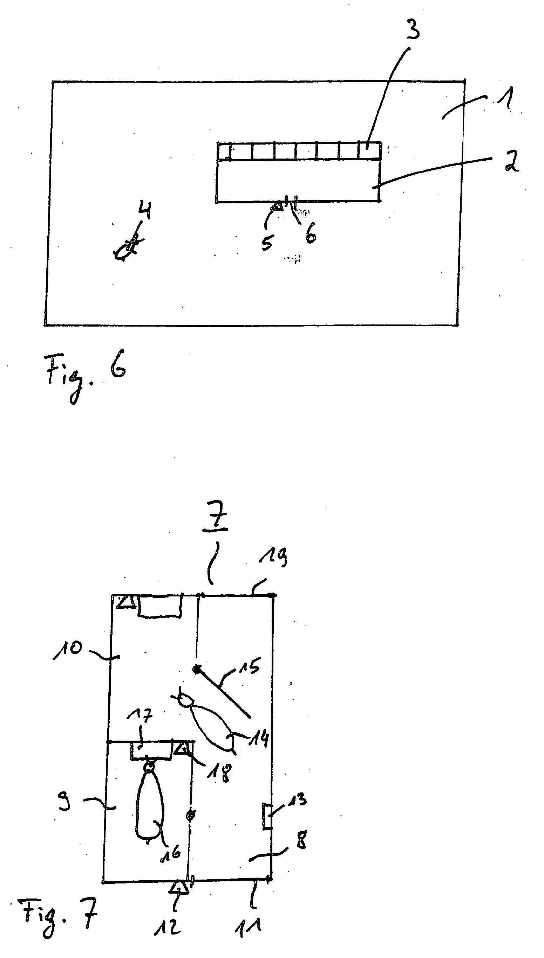

Ein weiterer Melkbereich 7 ist in Figur 6 dargestellt. Er besteht im wesentlichen aus einem Gangbereich 8, einem ersten Melkstand 9 und einem zweiten Melkstand 10. Der Gangbereich kann durch eine erste Tür 11 betreten werden, nach-dem ein Tier durch das Aussenden des tierindividuellen Signals TS durch den ersten Lautsprecher 12 gerufen wurde. Durch die Tierdetektionseinheit 13 wird das Tier identifiziert und die Meldung M ausgelöst. Ein erstes Tier 14 wird in einen freien Melkstand, z. B. den zweiten Melkstand 10 geleitet, der durch eine Drehtür 15 vom Gangbereich abtrennbar zugänglich ist. Ein zweites Tier 16 ist bereits in dem ersten Melkstand 9. Kurz vor Auffüllen einer Fütter- und Tränkeeinheit 17 ertönt das tierspezifische Signal TS aus dem zweiten Lautsprecher 18, danach beginnt der Melkvorgang. Nach Abschluß desselben können die Tiere den Melkbereich 7 durch die zweite Tür 19 verlassen.

### Bezugszeichenliste

- *1*: *Aufenthaltsbereich*
- *2*: *Melkbereich*
- *3*: *Melkstand*
- *4*: *Tier*
- *5*: *Lautsprecher*
- *6*: *Eingang*
- *7*: *Melkbereich*
- *8*: *Gangbereich*
- *9*: *Erster Melkstand*
- *10*: *Zweiter Melkstand*
- *11*: *Erste Tür*
- *12*: *Erster Lautsprecher*
- *13*: *Tierdetektionseinheit*
- *14*: *Erstes Tier*
- *15*: *Drehtür*
- *16*: *Zweites Tier*
- *17*: *Fütter- und Tränkeeinheil*
- *18*: *Zweiter Lautsprecher*
- *19*: *Zweite Tür*

- AH: Aversive Handlung
- M: Meldung
- Δt: Zeitspanne
- T: Periode
- t_{1,} t₁': erster Zeitpunkt
- t_{2,} t₂': zweiter Zeitpunkt
- TS: Tierindividuelles Signal

## Patentansprüche

1. Verfahren zum Beeinflussen eines Tieres, umfassend die folgenden Schritte
a) Bestimmung von ersten Koordinaten (K1) eines Tieres zu einem ersten Zeitpunkt (t1);
b) Aussenden wenigstens eines Signals (TS) zu dem Tier;
c) Bestimmung von Koordinaten (K2) des Tieres zu einem zweiten Zeitpunkt (t2);
d) Erzeugung eines Meldesignals, wenn eine Koordinatendifferenz (ΔK) der zweiten Koordinaten (K2) und der ersten Koordinaten (K1) nicht in einer vorgegebenen Bandbreite von den Koordinaten (K1) in Richtung eines Zielbereichs weist.

2. Verfahren nach Anspruch 1, **dadurch gekennzeichnet, dass** wenigstens ein Teil der Verfahrensschritte wiederholt wird, wenn eine Meldesignal erzeugt wird, wobei die Anzahl der erzeugten Meldesignale gespeichert wird, wobei vorzugsweise wenigstens die Schritte c) bis d) oder b) bis d) wiederholt werden.

3. Verfahren nach Anspruch 1 oder 2, **dadurch gekennzeichnet, dass** nach einer vorbestimmten Anzahl von Meldesignalen und/oder nach einer vorgegebenen Zeitspanne (Δt) mindestens eine Meldung (M) erzeugt wird.

4. Verfahren nach mindestens einem der vorhergehenden Ansprüche, **dadurch gekennzeichnet, dass** mindestens eine aversive Handlung (AH) an dem betreffenden Tier durchgeführt wird.

5. Verfahren nach mindestens einem der vorhergehenden Ansprüche, **dadurch gekennzeichnet, dass** wenigstens ein Signal einer Gruppe von Signalen entnommen ist, welche akustische, optische, mechanische, elektrische Signale, Geruchssignale und daraus kombinierte Signale umfasst.

6. Verfahren nach mindestens einem der vorhergehenden Ansprüche, **dadurch gekennzeichnet, dass** das Signal über einer Länge des Signals zeitlich veränderbar ist und vorzugsweise unterschiedliche Frequenzen und/oder Intensitäten aufweist.

7. Verfahren nach mindestens einem der vorhergehenden Ansprüche, **dadurch gekennzeichnet, dass** wenigstens ein Signal wenigstens einen akustischen Anteil aufweist und vorzugsweise wenigstens eine Tonfolge umfasst, wobei besonders bevorzugt das Signal eine phonetisch aussprechbare Tonfolge, insbesondere einen Namen des Tieres umfasst.

8. Verfahren nach mindestens einem vorhergehenden Ansprüche, **dadurch gekennzeichnet, dass** Stärke und/oder Frequenz einer auf eine erste aversive Handlung (AH) folgenden weiteren aversiven Handlung (AH) zunimmt.

9. Verfahren nach mindestens einem der vorhergehenden Ansprüche, **dadurch gekennzeichnet, dass** die vorgegebene Zeitspanne (Δt) mindestens so bemessen ist, dass das Tier auch dann den Zielbereich innerhalb der vorgegebenen Zeitspanne (Δt) erreichen kann, wenn es sich zum Zeitpunkt des Aussendens des tierindividuellen Signals (TS) weit vom Zielbereich entfernt aufhält.

10. Verfahren nach einem der vorhergehenden Ansprüche, **dadurch gekennzeichnet, dass** die Bestimmung der Koordinaten des Tieres durch ein Ortungssystem erfolgt.

11. Verfahren nach mindestens einem der vorhergehenden Ansprüche, **dadurch gekennzeichnet, dass** das Ortungssystem Sender bekannten Ortes und bewegliche Empfänger oder bewegliche Sender und Empfänger bekannten Ortes umfasst.

12. Verfahren nach mindestens einem der vorhergehenden Ansprüche, **dadurch gekennzeichnet, dass** die vorgegebene Zeitspanne (Δt) in Abhängigkeit von den Koordinaten des Tieres relativ zu den Koordinaten des Zielbereichs bestimmt wird.

13. Verfahren nach mindestens einem der vorhergehenden Ansprüche, **dadurch gekennzeichnet, dass** eine Meldung (M) dann ausgelöst wird, wenn festgestellt wird, dass die Koordinaten innerhalb des Zielbereichs liegen.

14. Verfahren nach mindestens einem der vorhergehenden Ansprüche, **dadurch gekennzeichnet, dass** das Signal (TS) zumindest unmittelbar vor einer Fütterung, insbesondere in dem Zielbereich ausgesendet wird und/oder dass das Signal (TS) zusätzlich vor dem Betreten des Zielbereichs durch das Tier ausgesendet wird.

15. Verfahren nach mindestens einem der vorhergehenden Ansprüche, **dadurch gekennzeichnet, dass** bei Vorgabe der Bandbreite Eigenschaften des Geländes und/oder des Tieres berücksichtigt werden.

16. Verfahren nach mindestens einem der vorhergehenden Ansprüche, bei dem das auszusendende Signal ein tierindividuelles Signal (TS) ist.

17. Vorrichtung zum Treiben eines Tieres in einen Zielbereich mit einem Aufenthaltsbereich (1), einem Zielbereich, mindestens einem Signalgeber und mindestens einer Tierdetektionseinheit (13), wobei das Tier durch das Aussenden eines Signals (TS) durch einen Signalgeber aus dem Aufenthaltsbereich (1) in den Zielbereich gerufen wird, **dadurch gekennzeichnet, dass** durch eine Tierdetektionseinheit (13) überprüft wird, ob das Tier innerhalb einer vorgegebenen Zeitspanne (Δt) eine Meldung (M) auslöst, und dass ein Meldesignal erzeugt wird, wenn die Meldung (M) nicht während der vorgegebenen Zeitspanne (Δt) erfolgt ist.
